# FASCICULE DE BREVET EUROPEEN

(11) **EP 1 301 819 B1**
(45) Date de publication et mention de la délivrance du brevet: **07.01.2009**
(21) Numéro de dépôt: 01949606.6
(22) Date de dépôt: 02.07.2001
(51) Int. Cl.: G02C 1/02, G02C 5/22

(54) **LUNETTES AYANT DES BRANCHES FILAIRES**
BRILLE MIT DRAHTBÜGELN
SPECTACLES WITH WIRE-LIKE BRANCHES

(30) Priorité: 17.07.2000 FR 0009295
(43) Date de publication de la demande: 16.04.2003
(73) Titulaire: Minima, 91310 Linas (FR)
(72) Inventeur: TIBERGHIEN, Hervé, F-06500 Menton (FR)
(74) Mandataire: Jaunez, Xavier
(86) Numéro de dépôt international: PCT/FR2001/002109
(87) Numéro de publication internationale: WO 2002/006882

(56) Documents cités:
- EP-A- 0 426 006
- EP-A- 0 805 369
- WO-A-92/08158
- WO-A-96/33438
- FR-A- 2 751 431
- US-A- 943 085

## Description

La présente invention concerne des lunettes ayant des branches de type filaire.

Il est connu, notamment du document US-A-943 085, des lunettes comprenant deux verres de correction optique reliés l'un à l'autre par un pontet et deux branches filaires associées chacune à une zone latérale d'un verre. Chaque branche a une extrémité fixée à une charnière qui possède un axe vertical et est solidaire d'une extrémité d'une tige support dont l'extrémité opposée est fixée à ladite portion latérale du verre correspondant, normalement à celle-ci. Les branches sont ainsi mobiles entre une position déployée dans laquelle les branches sont sensiblement perpendiculaires aux verres et une position repliée dans laquelle les branches sont sensiblement parallèles aux verres. De telles lunettes sont très légères et bénéficient d'un aspect extérieur remarquablement esthétique qui leur est conféré notamment par la finesse de la monture. Toutefois, les lunettes en position repliée présentent un encombrement relativement important et des parties en saillie, dont les charnières. En effet, chaque charnière constitue une partie proéminente en saillie de la branche qui risque de s'accrocher à des fibres d'un tissu d'une veste ou à des mailles d'un tricot lorsque les lunettes sont disposées dans une poche d'un tel vêtement. Par ailleurs, il existe un risque que certains utilisateurs considèrent que la charnière rompt l'impression de finesse dégagée par la monture des lunettes.

Il serait donc intéressant de disposer de lunettes ayant des branches filaires articulées au moyen de charnières qui soient de faibles dimensions par rapport aux branches et permettent d'obtenir un faible encombrement en position repliée.

Pour l'arrière-plan technologique des montures de type filaire, on pourra également se référer aux documents WO-A-96/33438, EP-A-0 805 369 et WO-A-92/08158.

Il existe des lunettes ayant des articulations de branches qui sont intégrées à la monture.

Ainsi, il est connu, notamment du document EP-A-0 426 006, des lunettes comportant des verres solidaires d'une monture comportant, d'une part, une partie d'enchâssement des verres et, d'autre part, des branches formées de tiges cylindriques reliées à la partie d'enchâssement par des parties coudées. Chaque partie coudée a une extrémité solidaire de la partie d'enchâssement, et une extrémité opposée ayant une face terminale formant un angle par rapport au plan dans lequel la partie d'enchâssement est inscrite pour coopérer avec une face terminale d'une extrémité de la branche qui forme un angle avec une direction longitudinale générale de la branche. La branche est reliée à la partie coudée au moyen d'une vis introduite dans les extrémités précitées de la branche et de la partie coudée perpendiculairement aux faces précitées, de manière que la branche pivote selon une trajectoire conique autour de l'axe de la vis, entre une position déployée de la branche qui est alors perpendiculaire à la partie d'enchâssement et une position repliée de la branche qui est alors parallèle à la partie d'enchâssement. L'articulation est dans ce cas totalement intégrée dans la branche et dans la partie coudée.

Toutefois, ceci suppose d'avoir des branches et des partie coudées ayant une section relativement importante très supérieure à la section de branches filaires, de sorte que ce montage est inapplicable aux lunettes à monture filaire.

Une approche analogue est illustrée dans le document FR-A-2 751 431.

Un but de l'invention est de proposer des lunettes à monture filaire présentant des avantages analogues aux lunettes à articulations intégrées.

En vue de la réalisation de ce but, on prévoit, selon l'invention, des lunettes ayant un plan de symétrie médian vertical et comprenant une partie optique frontale et deux branches filaires associées chacune de part et d'autre dudit plan de symétrie à une zone latérale de la partie optique frontale, chaque branche étant galbée et ayant une extrémité d'articulation conformée en oeillet inscrit dans un plan vertical sécant d'une direction longitudinale générale de la branche, et un élément d'articulation étant fixé sur une surface interne de la zone latérale correspondante pour recevoir l'oeillet, ledit élément d'articulation ayant une forme générale cylindrique et comprenant une rainure hélicoïdale de guidage de l'oeillet s'étendant sur 180 degrés environ, de sorte que chaque branche peut pivoter autour d'un axe sensiblement normal à ladite surface interne, entre une position déployée de la branche qui est alors sensiblement perpendiculaire à la partie optique frontale, et une position repliée de la branche qui est alors sensiblement parallèle à la partie optique frontale et au plus près de celle-ci.

Ainsi, l'élément d'articulation est adjacent à la partie optique frontale et peut être réalisé selon une structure compacte qui ne s'étend pas en saillie latérale par rapport à la partie optique frontale ou aux branches. L'élément d'articulation est en outre de structure simple et peu visible. Enfin, le fait que la rainure de l'élément d'articulation soit hélicoïdale permet notamment de limiter le risque d'un frottement des branches sur la partie optique frontale lors du repliement desdites branches. En outre, cette caractéristique permet de faciliter l'application de l'invention à des lunettes ayant une partie optique frontale plane.

On pourra prévoir en plus d'interposer une rondelle entre l'oeillet et chaque face en regard de la rainure hélicoïdale, ceci pour éviter une usure prématurée des faces de la rainure.

Selon un mode de réalisation particulier, l'élément d'articulation comprend un socle ayant une face d'appui sur ladite zone latérale qui est pourvue d'un ergot en saillie reçu dans une encoche ménagée sur un bord de la zone latérale, et un chapeau ayant une face en regard d'une face du socle opposée à la face d'appui pour délimiter une rainure de guidage de l'oeillet.

L'élément d'articulation a alors une structure simple qui permet un montage aisé et rapide des branches.

De préférence dans cette réalisation, le chapeau comprend un ergot en saillie latérale et reçu dans une encoche du socle, et de plus le socle et le chapeau sont réunis par un boulon et traversant la partie optique frontale, l'oeillet et l'élément d'articulation.

D'autres caractéristiques et avantages de l'invention ressortiront à la lecture de la description qui suit d'un mode de réalisation particulier non limitatif de l'invention.

Il sera fait référence aux dessins annexés, parmi lesquels :

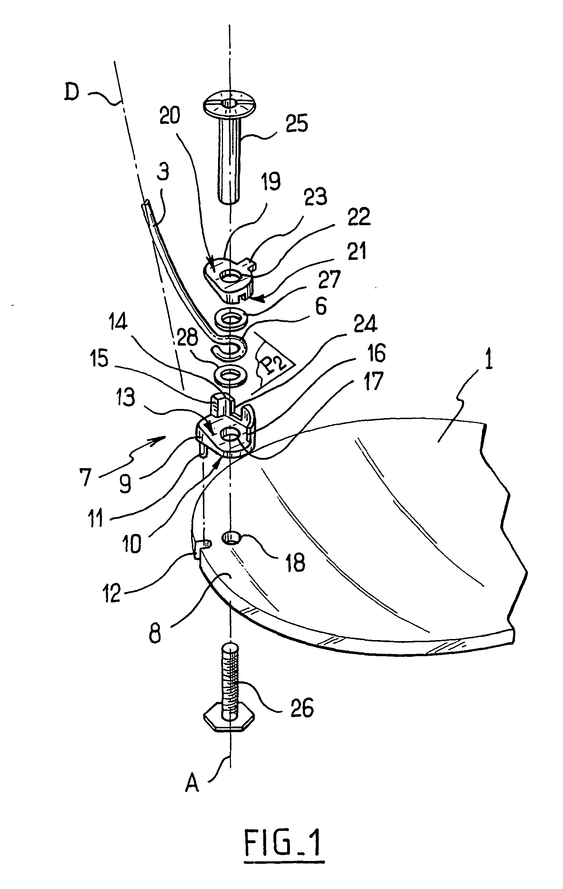

- la figure 1 est une vue partielle en perspective et en éclaté de l'articulation d'une branche à l'un des verres d'une paire de lunettes conforme à l'invention ;
- la figure 2 est une vue par l'arrière en perspective de la paire de lunettes déployée ;
- la figure 3 est une vue analogue à la figure 2 de la paire de lunettes repliée.

En référence aux figures, les lunettes conformes à l'invention comprennent une partie optique frontale, ici composée de deux verres 1 reliés l'un à l'autre par un pontet 2, associée à deux branches filaires 3 montées chacune sur un des verres 1 à l'opposé l'une de l'autre, de part et d'autre d'un plan de symétrie médian vertical noté P1.

La partie optique frontale, bien qu'ici composée de deux verres, pourrait comprendre un verre unique avec une découpe pour le nez de l'utilisateur afin de former un masque. Le pontet serait alors formé par ladite découpe. Par ailleurs, on peut prévoir en variante d'enchâsser les verres dans une monture. Par verres, on entend aussi bien les verres dits minéraux que ceux dits organiques qui sont réalisés en matière plastique comme du polyméthacrylate de méthyle. De même, les verres peuvent être des verres de correction optique ou des verres filtrants tels que des verres solaires.

Chaque branche 3 est ici formée d'un fil de titane galbé ayant une extrémité 4 légèrement courbée et recouverte d'une gaine 5 pour être en contact avec une des oreilles de l'utilisateur, et une extrémité opposée conformée en un oeillet 6 inscrit dans un plan P2 formant un angle avec une direction longitudinale générale D de la branche 3. Les branches 3 peuvent naturellement être réalisées dans un autre métal, comme de l'acier inoxydable.

L'oeillet 6 de chaque branche 3 est relié à un élément d'articulation généralement désigné en 7 et fixé sur une zone latérale 8 de la surface intérieure d'un verre 1 à l'opposé du pontet 2.

Chaque élément d'articulation 7 comprend un socle 9 ayant une face 10 d'appui sur ladite zone latérale 8, qui est pourvue d'un ergot 11 d'anti-rotation en saillie reçu dans une encoche 12 ménagée sur un bord de la zone latérale 8, et une face opposée 13 qui est inclinée par rapport à la face d'appui 10 et forme une face de frottement de l'oeillet 6 parallèlement au plan P2. Une paroi 14 se dresse en saillie de la face 13 et présente des bords opposés 15, 16 à 180° l'un par rapport à l'autre. Le socle 9 comporte un perçage 17 d'axe A perpendiculaire à la face d'appui 10 ménagé dans le socle 9 en regard d'un trou 18 ménagé dans la zone latérale 8 selon l'axe A qui est sensiblement normal à celle-ci.

Un chapeau 19 est monté sur le socle 9. Le chapeau 19 possède une face 20 parallèle à la face d'appui 10, et une face opposée 21 inclinée par rapport à la face 20 pour former une face de frottement de l'oeillet 6 parallèlement au plan P2. Le chapeau 19 est monté sur le socle 9 pour que la face 21 s'étende en regard de la face 13 du socle 9 parallèlement à celle-ci afin de délimiter une rainure hélicoïdale de guidage de l'oeillet 6. On a également prévu ici d'interposer une rondelle 27, 28 entre l'oeillet 6 et chaque face en regard de la rainure. On pourra utiliser de simples rondelles plates en acier inox, de quelques dixièmes de millimètre d'épaisseur. Ces rondelles 27, 28 évitent une usure prématurée des faces 13, 21 de la rainure hélicoïdale par suite du frottement de l'oeillet, notamment dans le cas d'une monture en titane dont la surface est fortement abrasive : une telle usure induirait en effet un jeu hautement indésirable pour la branche concernée.

Le chapeau 19 comprend un perçage 22 coaxial au perçage 17, ainsi qu'un ergot 23 d'anti-rotation en saillie latérale et reçu dans une encoche 24 du socle 9.

Le socle 9 et le chapeau 19 sont réunis par un boulon passant par le perçage 22, l'oeillet 6, le perçage 17 et le trou 18. Le boulon assure ainsi la fixation de l'élément d'articulation 7 au verre 1 et le maintien de l'oeillet 6 entre le socle 9 et le chapeau 19. Le boulon comprend en l'espèce un manchon 25 épaulé et taraudé coopérant avec une vis 26 à tête hexagonale.

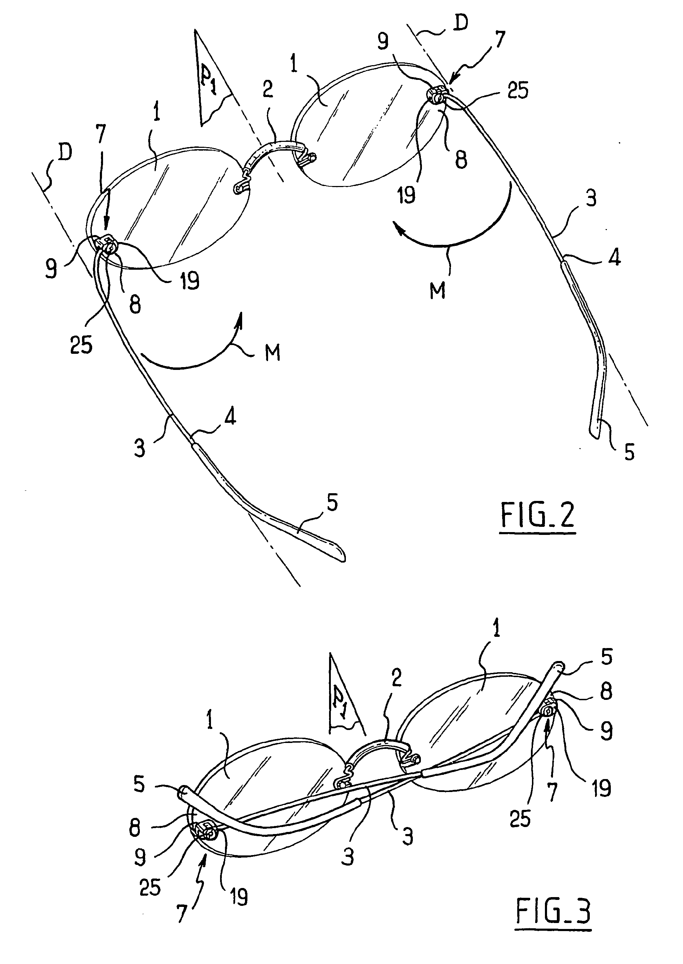

On comprend que le boulon constitue en même temps un axe de pivotement de la branche 3 entre une position déployée (représentée à la figure 2) dans laquelle la branche 3 est en butée contre le bord 15 et est sensiblement perpendiculaire à la partie optique frontale, et une position repliée (représentée à la figure 3) dans laquelle la branche 3 est en butée contre le bord 16 et est sensiblement parallèle à la partie optique frontale. Le mouvement de passage de la position déployée à la position repliée est symbolisé par les flèches M de la figure 2. Lors de ce mouvement, ou du mouvement inverse, l'élément d'articulation 7 forme un bloc rigidement solidaire de la partie optique associée, sans rotation relative du fait des ergots d'anti-rotation 11, 23.

La combinaison du galbe des branches 3 et de la rainure hélicoïdale permet d'amener les branches 3 au plus près des verres 1 en position repliée sans que celles-ci ne touchent les verres 1 autrement que par la gaine 5. On évite ainsi que les branches 3 ne viennent frotter et rayer la surface interne des verres 1 pendant leur mouvement entre la position déployée et la position repliée.

Bien entendu, l'invention n'est pas limitée au mode de réalisation décrit et on peut y apporter des variantes de réalisation sans sortir du cadre de l'invention tel que défini par les revendications.

## Revendications

1. Lunettes ayant un plan de symétrie médian vertical (P1) et comprenant une partie optique frontale (1) et deux branches filaires (3) associées chacune de part et d'autre dudit plan de symétrie à une zone latérale (8) de la partie optique frontale, **caractérisées en ce que** chaque branche (3) est galbée et a une extrémité d'articulation conformée en oeillet (6) inscrit dans un plan vertical (P2) sécant d'une direction longitudinale générale (D) de la branche, et **en ce qu'**un élément d'articulation (7) est fixé sur une surface interne de la zone latérale correspondante pour recevoir l'oeillet (6), ledit élément d'articulation (7) ayant une forme générale cylindrique et comprenant une rainure hélicoïdale (13, 21) de guidage de l'oeillet (6) s'étendant sur 180 degrés environ, de sorte que chaque branche (3) peut pivoter autour d'un axe (A) sensiblement normal à ladite surface interne, entre une position déployée de la branche qui est alors sensiblement perpendiculaire à la partie optique frontale, et une position repliée de la branche qui est alors sensiblement parallèle à la partie optique frontale et au plus près de celle-ci.

2. Lunettes selon la revendication 1, **caractérisées en ce qu'**une rondelle (28 ; 27) est interposée entre l'oeillet (6) et chaque face en regard de la rainure hélicoïdale (13 ; 21).

3. Lunettes selon la revendication 1 ou la revendication 2, **caractérisées en ce que** l'élément d'articulation (7) comprend un socle (9) ayant une face (10) d'appui sur ladite zone latérale (8) qui est pourvue d'un ergot (11) en saillie reçu dans une encoche (12) ménagée sur un bord de la zone latérale, et un chapeau (19) ayant une face (21) en regard d'une face (13) du socle opposée à la face d'appui (10) pour délimiter une rainure de guidage de l'oeillet.

4. Lunettes selon la revendication 3, **caractérisées en ce que** le chapeau (19) comprend un ergot (23) en saillie latérale et reçu dans une encoche (24) du socle (9).

5. Lunettes selon la revendication 3 ou la revendication 4, **caractérisées en ce que** le socle (9) et le chapeau (19) sont réunis par un boulon (25, 26) traversant la partie optique frontale (1), l'oeillet (6), et l'élément d'articulation (7).

## Claims

1. Eyeglasses having a vertical midplane of symmetry (P1) and comprising a front optical portion (1) and two wire temples (3) each associated on a respective side of said plane of symmetry with a corresponding side zone (8) of the front optical portion, the eyeglasses being **characterized in that** each temple (3) is curved and has a hinge end shaped into an eyelet (6) lying in a vertical plane (P2) intersecting a general longitudinal direction (D) of the temple, and **in that** a hinge element (7) is fixed on an inside surface of the corresponding side zone to receive the eyelet (6), said hinge element (7) being generally cylindrical in shape and including a helical slot(13, 21) for guiding the eyelet (6) and extending over about 180°, so that each temple (3) can pivot about an axis (A) that is substantially normal to said inside surface between a deployed position of the temple which is then substantially perpendicular to the front optical portion and a folded position of the temple which is then substantially parallel to the front optical portion and closer thereto.

2. Eyeglasses according to claim 1, **characterized in that** a washer (28; 27) is interposed between the eyelet (6) and each facing face of the helical slot (13; 21).

3. Eyeglasses according to claim 1 or claim 2, **characterized in that** the hinge element (7) comprises a base (9) having a bearing face (10) bearing against said side zone (8) and provided with a projecting stud (11) that is received in a notch (12) formed in an edge of the side zone, and a cover (19) having a face (21) facing a face (13) of the base opposite from the bearing face (10) so as to define an eyelet guide slot.

4. Eyeglasses according to claim 3, **characterized in that** the cover (19) has a side projecting stud (23) received in a notch (24) of the base (9).

5. Eyeglasses according to claim 3 or claim 4, **characterized in that** the base (9) and the cover (19) are united by a fastener (25, 26) passing through the front optical portion (1), the eyelet (6), and the hinge element (7).

## Patentansprüche

1. Brille, die eine vertikale Mittelsymmetrieebene (P1) hat und einen optischen Frontteil (1) sowie zwei Drahtbügel (3) umfasst, die jeweils auf beiden Seiten der genannten Symmetrieebene mit einer seitlichen Zone (8) des optischen Frontteils verbunden sind, **dadurch gekennzeichnet, dass** jeder Bügel (3) gewölbt ist und ein Gelenkverbindungsende in Form einer Öse (6) hat, die in einer vertikalen Ebene (P2) liegt, die eine Hauptlängsrichtung (D) des Bügels schneidet, und dass das Gelenkverbindungselement (7) an einer Innenfläche der entsprechenden seitlichen Zone befestigt ist, um die Öse (6) aufzunehmen, wobei das Gelenkverbindungselement (7) eine im Wesentlichen zylindrische Form hat und eine schraubenförmige Führungsnut (13, 21) zum Führen der Öse (6) umfasst, die sich über ungefähr 180 Grad erstreckt, so dass sich jeder Bügel (3) um eine im Wesentlichen senkrecht zur genannten Innenfläche verlaufende Achse (A) zwischen einer ausgeklappten Position des Bügels, der dann im Wesentlichen senkrecht zum optischen Frontteil ist, und einer eingeklappten Position des Bügels verschwenken kann, der dann im Wesentlichen parallel zum optischen Frontteil und zumindest nahe demselben ist.

2. Brille nach Anspruch 1, **dadurch gekennzeichnet, dass** eine Unterlegscheibe (28; 27) zwischen der Öse (6) und jeder gegenüberliegenden Fläche der schraubenförmigen Nut (13; 21) angeordnet ist.

3. Brille nach Anspruch 1 oder Anspruch 2, **dadurch gekennzeichnet, dass** das Gelenkverbindungselement (7) einen Fuß (9) umfasst, der eine Anlagefläche (10) zur Anlage an der genannten seitlichen Zone (8) hat, die mit einem vorstehenden Zapfen (11) versehen ist, der in einer Kerbe (12) aufgenommen ist, die an einem Rand der seitlichen Zone ausgebildet ist, sowie eine Kappe (19), die eine Fläche (21) hat, die einer Fläche (13) des Fußes gegenüberliegt, die der Anlagefläche (10) entgegengesetzt ist, um so eine Führungsnut für die Öse zu begrenzen.

4. Brille nach Anspruch 3, **dadurch gekennzeichnet, dass** die Kappe (19) einen vorstehenden seitlichen Zapfen (23) hat, der in einer Kerbe (24) des Fußes (9) aufgenommen ist.

5. Brille nach Anspruch 3 oder Anspruch 4, **dadurch gekennzeichnet, dass** der Fuß (9) und die Kappe (19) durch einen Schraubbolzen mit Mutter (25, 26) verbunden sind, der den optischen Frontteil (1), die Öse (6) und das Gelenkverbindungselement (7) durchsetzt.
